# DEMANDE DE BREVET EUROPEEN

(11) **EP 1 170 844 A1**
(43) Date de publication de la demande: **09.01.2002**
(21) Numéro de dépôt: 01401774.3
(22) Date de dépôt: 03.07.2001
(51) Int. Cl.: H02G 3/12

(54) **Dispositif pour la fixation semi-encastrée d'au moins un appareillage dans un conduit de câblage de profondeur inférieure à celle de l'appareillage**

(30) Priorité: 03.07.2000 FR 0008623
(71) Demandeur: Planet Wattohm, 60300 Senlis (FR)
(72) Inventeur: Coutant, Régis, 60117 Vauciennes (FR); Xerri, Frédéric, 87000 Limoges (FR)
(74) Mandataire: CABINET BONNET-THIRION

(57) **Abrégé**

Le dispositif comporte :
- un boîtier (20) qui est pourvu, d'une part, de moyens (36, 37, 38, 39) pour sa fixation dans le conduit (2) et, d'autre part, de moyens (25) de réception de l'appareillage (1) dans le boîtier (20) et qui possède une ouverture frontale (26) d'introduction de l'appareillage (1) ;
- un cache ajouré ou plastron (50) pourvu de moyens (52) pour sa fixation sur le conduit (2) et/ou le boîtier (20) à la façon d'un capot et présentant un ajour (51).

Pour une fixation semi-encastrée de l'appareillage (1) dans un conduit (2) de profondeur (p) inférieure à celle (P') de l'appareillage (1), le boîtier (20) fait partiellement saillie du plastron (50) au travers de l'ajour (51) de ce dernier.

## Description

La présente invention concerne d'une manière générale la fixation d'un quelconque appareillage, tel qu'une prise de courant ou de télécommunication, dans un quelconque conduit de câblage, tel qu'une plinthe, une moulure, une colonne ou autre goulotte, utilisé dans l'équipement électrique et/ou de télécommunication des intérieurs domestiques ou professionnels.

On sait que dans certaines installations, que ce soit en construction neuve ou en rénovation, on utilise souvent, pour réaliser un câblage électrique ou optique, des conduits fixés contre les murs. Ces conduits courent ainsi horizontalement le long des murs, à leur base à la façon de plinthes ou à leur sommet à la façon de moulures, ou encore verticalement contre un mur, dans un angle ou sur une colonne. De tels conduits offrent intérieurement un chemin de câblage protégé et fonctionnel pour permettre une desserte aisée et fiable d'appareillages électriques ou de télécommunication divers.

Ces appareillages électriques sont généralement logés individuellement ou par série dans un boîtier ou cadre de support qui est le plus souvent fixé directement sur le mur, avec un encastrement plus ou moins complet dans ce dernier, et qui est accolé au conduit, voire même chevauche localement celui-ci transversalement par rapport à sa direction longitudinale.

Une telle disposition a pour avantage de permettre une mise en place rapide et de faciliter les interventions ultérieures. Mais elle a pour inconvénient de conduire à une emprise assez importante sur le mur (ou la colonne), ce qui s'avère relativement inesthétique et difficilement conciliable avec certains problèmes ponctuels d'encombrement. De plus, il n'est pas toujours ni souhaitable ni commode de réaliser un encastrement du boîtier avec le ou les appareillages qu'il renferme dans le mur récepteur.

Dans d'autres installations, comme illustré par exemple par le document FR 2 729 255, chaque appareillage électrique est reçu individuellement dans un boîtier qui, de profondeur hors tout supérieure à celle du conduit, traverse le fond de ce conduit à la faveur d'un ajour ménagé localement à cet effet dans ce fond pour être reçu, sur la partie surabondante de sa profondeur, dans un évidement du mur spécialement ménagé en correspondance.

Ce type d'installation donne satisfaction sur le plan de l'esthétique et de l'encombrement. Cependant, il est nécessaire d'intervenir localement à la fois sur le conduit et le mur pour ménager le passage dans le fond du conduit et le logement correspondant dans le mur pour le boîtier recevant l'appareillage. De plus, cette solution se prête mal à l'utilisation de boîtiers pré-équipés en atelier avec le nombre et le type exacts d'appareillages de mécanismes prévus, dont la longueur est variable.

Dans d'autres installations enfin, le conduit, qui est alors communément appelé goulotte, offre une profondeur suffisante pour recevoir, non seulement les conducteurs électriques, mais également le ou les appareillages à fixer sur toute la profondeur de ces derniers. Dans ce type d'installation, les appareillages sont, soit directement rapportés sur la goulotte en question, soit logés dans un boîtier ou sur un cadre support qui est lui-même rapporté sur cette goulotte. Une plaque ajourée ou plastron est parfois prévue pour se substituer localement au couvercle de la goulotte de manière à offrir, au travers d'un ajour de dimensions adaptées, un accès à la face avant utile du ou des appareillages. Mais, dans ce cas, la face avant utile du ou des appareillages affleure le plastron ainsi rapporté, sans que le boîtier renfermant le ou les appareillages électriques ne fasse saillie de ce plastron, puisque la profondeur de la goulotte est suffisante pour contenir le boîtier et le ou les appareillages qu'elle contient sur toute leur profondeur.

C'est ainsi qu'on connaît un dispositif pour la fixation d'au moins un appareillage dans un conduit de câblage, comportant :
- un boîtier qui est pourvu, d'une part, de moyens pour sa fixation dans le conduit et, d'autre part, de moyens de réception de l'appareillage dans le boîtier et qui possède une ouverture frontale d'introduction de l'appareillage ;
- un cache ajouré ou plastron pourvu de moyens pour sa fixation sur le boîtier ou cadre ou sur le conduit à la façon d'un capot et présentant un ajour d'accès à la face avant utile (enjoliveur) de l'appareillage.

Cette disposition, qui a pour avantage de réduire l'emprise sur le mur, a pour inconvénient majeur d'imposer une profondeur relativement importante de la goulotte sur toute sa longueur, ce qui s'avère fort inesthétique et le plus souvent très pénalisant quant à l'ergonomie générale du volume intérieur ainsi équipé, dans la mesure où la goulotte, du fait de sa profondeur, forme une saillie relativement importante sur le mur, gênant l'implantation du mobilier, voire même la circulation des personnes, chariots ou autres véhicules.

Un but de l'invention est de concevoir un dispositif de fixation d'au moins un appareillage électrique dans un conduit de câblage de profondeur inférieure à celle de l'appareillage qui, tout en restant de mise en oeuvre simple, rapide et fiable, limite autant que possible l'emprise en largeur et la saillie en profondeur sur le mur du conduit et des boîtiers recevant les appareillages.

En vue de la réalisation de ce but, on prévoit selon l'invention un dispositif du dernier type précité dans lequel, pour une fixation semi-encastrée de l'appareillage dans un conduit de profondeur inférieure à celle de l'appareillage, le boîtier fait partiellement saillie du plastron au travers de l'ajour de ce dernier.

Ainsi, le boîtier, avec le ou les appareillages qu'il contient, est exclusivement logé dans le conduit, sans débordement latéral sur le mur. L'emprise en largeur sur le mur n'est donc pas augmentée par rapport à celle du conduit. De plus, le conduit conserve, dans son ensemble, une profondeur restreinte, si bien qu'il ne forme pas une saillie inesthétique ou gênante sur le mur. Seul, le boîtier, avec le ou les appareillages électriques qu'il reçoit, forme, sur le conduit, une saillie supplémentaire en profondeur. Mais cette saillie est localisée et n'est de ce fait pas très gênante. De plus, le plastron et la partie du boîtier qui déborde de ce plastron se combinent pour former un habillage permettant de préserver une esthétique satisfaisante de l'ensemble. Enfin, ces avantages de réduction d'encombrement et de préservation de l'esthétique, ne sont pas obtenus au détriment de la commodité et de l'efficacité de la mise en oeuvre du dispositif lors de l'installation ou d'une intervention ultérieure. Au contraire, la solution proposée selon l'invention est exempte de toute intervention spécifique de la part de l'installateur sur le conduit ou le mur : aucun passage ni évidement n'est à réaliser dans le fond du conduit et dans le mur. En pratique, l'appareillage électrique ou la série d'appareillages électriques seront pré-installés dans le boîtier, avec les câblages correspondants, il ne restera plus sur le chantier qu'à fixer le boîtier sur le conduit grâce aux moyens de fixation prévus sur ce boîtier pour coopérer avec des moyens correspondants prévus sur le conduit.

Dans un mode de réalisation avantageux, le boîtier comporte un corps principal constitué par un profilé de forme et longueur adaptées à celles du ou des appareillages à fixer et deux embouts qui sont rapportés à chacune des deux extrémités du corps profilé par des moyens de montage et qui portent les moyens de fixation du boîtier sur le conduit. Le corps profilé est ainsi découpé, à partir du type de profilé sélectionné, à la longueur voulue pour recevoir le ou les appareillages électriques souhaités. De même, un seul type d'embout est utilisé pour chaque type de profilé, quelle que soit la longueur du corps profilé. On réduit ainsi le nombre de pièces à fabriquer, stocker et référencer.

Après la découpe du profilé à la longueur voulue, ces embouts sont simplement rapportés aux deux extrémités du corps profilé pour constituer le boîtier. Le fait que les moyens de fixation soient portés par les embouts permet de simplifier la forme du corps profilé et d'assurer une fixation stable et sûre du boîtier par ses deux extrémités.

Avantageusement, les moyens de montage rapporté de chacun des embouts sur le corps profilé du boîtier sont constitués par des moyens d'emboîtement simple et ne comportent aucun autre moyen de verrouillage de cet emboîtement. L'assemblage du boîtier est ainsi rapide et commode. De plus, la fixation du boîtier sur le conduit s'opérant par ses embouts et le plastron réalisant, par le jeu faible ou nul existant entre le bord de son ajour et le boîtier, un cerclage de ce boîtier, aucun risque de déboîtement des embouts n'est à craindre sans qu'il soit nécessaire de prévoir un autre moyen de verrouillage de l'emboîtement de l'embout sur le corps profilé.

Les moyens d'emboîtement de chaque embout comportent une partie extérieure qui s'oppose à l'épanouissement du corps profilé. On améliore ainsi la cohésion du boîtier, afin d'éviter en particulier l'échappement involontaire des appareillages de leur prise avec les moyens de réception.

Un jeu aussi réduit que possible, voire nul, est prévu entre le contour de l'ajour du plastron et le boîtier. Cet ajustement possède, outre ses vertus esthétiques, une fonction mécanique de cerclage du boîtier. Ce cerclage renforce la cohésion du boîtier et s'oppose en particulier, d'une part, à l'épanouissement intempestif du corps profilé afin d'éviter l'échappement involontaire des appareillages de leur prise avec les moyens de réception, et, d'autre part, au déboîtement des embouts.

Avantageusement, les moyens de fixation du boîtier sur le conduit comportent, sur chacun des deux embouts, deux patins latéraux agencés pour venir en prise avec deux glissières associées ménagées longitudinalement sur le conduit. Ce mode d'assujettissement du boîtier au conduit est non seulement simple à réaliser, mais également commode à mettre en oeuvre pour l'installateur ou l'intervenant ultérieur. En effet, il suffit d'engager, par exemple par un simple clipsage, les patins de chacun des embouts avec les glissières associées, puis d'ajuster la position longitudinale du boîtier sur le conduit en faisant glisser les patins dans la glissière.

Pour faciliter encore la mise en oeuvre et assurer une immobilisation plus ferme du boîtier sur la glissière, on peut prévoir que l'un au moins des deux patins de l'un au moins des deux embouts du boîtier est mobile latéralement entre une configuration de blocage par friction sur la glissière correspondante du conduit, une configuration de coulissement libre sur la glissière et une configuration de libération complète de sa prise avec la glissière.

Avantageusement alors, le patin mobile est soumis à l'action d'un moyen de verrouillage mobile entre deux positions, l'une de verrouillage maintenant le patin mobile dans sa configuration de blocage sur la glissière et l'autre de déverrouillage laissant le patin mobile libre de revenir en configuration de coulissement libre sur la glissière ou de libération complète du boîtier de sa prise avec la glissière.

Dans un mode d'exécution particulièrement avantageux par sa simplicité et son efficacité, le moyen de verrouillage du patin mobile comporte un élément à came monté pivotant sur l'embout concerné du boîtier et offrant une prise quelconque pour son actionnement pivotant entre ses positions de verrouillage et de déverrouillage. En particulier, les deux positions angulaires de l'élément à came peuvent être séparées par un quart de tour. Cela est le cas par exemple lorsque l'élément à came se compose d'un tourillon reçu pour pivoter librement dans un palier ménagé sur l'embout concerné, d'une tête disposée à l'une des deux extrémités du tourillon et sur laquelle est ménagée une empreinte destinée à coopérer avec un outil du type tournevis, et d'un sabot disposé à l'autre extrémité du tourillon et présentant une forme globalement parallélépipédique allongée transversalement à l'axe de pivotement du tourillon dans le palier.

Pour fiabiliser le verrouillage, on peut de plus prévoir que le sabot de l'élément à came soit pourvu d'un bossage apte à être reçu dans une empreinte ménagée en correspondance sur le palier ou le patin mobile pour immobiliser temporairement l'élément à came en position de verrouillage.

Par ailleurs, pour simplifier la fabrication et réduire les coûts, l'élément à came, avec son tourillon, sa tête et son sabot, est réalisé en une seule pièce en matière plastique moulée. De même, chacun des deux embouts du boîtier, avec ses moyens de montage rapporté sur le corps profilé et ses moyens de fixation sur le conduit, est réalisé en une seule pièce en matière plastique moulée. Dans ce cas, la mobilité du patin mobile résulte d'une flexibilité élastique de ce patin, avec une configuration de repos correspondant à la configuration de coulissement libre sur la glissière correspondante, en prise avec celle-ci.

On peut par exemple prévoir que le corps profilé présente un profil en forme générale de U. Avantageusement alors, dans un mode d'exécution simple et efficace, les moyens de réception du ou des appareillages électriques dans le boîtier comportent des cornières longitudinales ménagées en saillie de la face intérieure des deux branches du corps profilé en U.

D'autres caractéristiques et avantages de l'invention apparaîtront à la lecture de la description qui suit d'un mode de réalisation particulier donné à titre d'exemple non limitatif.

Il sera fait référence aux dessins en annexe, parmi lesquels :
- la figure 1 est une vue en perspective éclatée d'un dispositif selon l'invention pour la fixation semi-encastrée d'un ensemble d'appareillages électriques dans un conduit de câblage ;
- la figure 2 est une vue en perspective du dispositif de la figure 1 après assemblage.

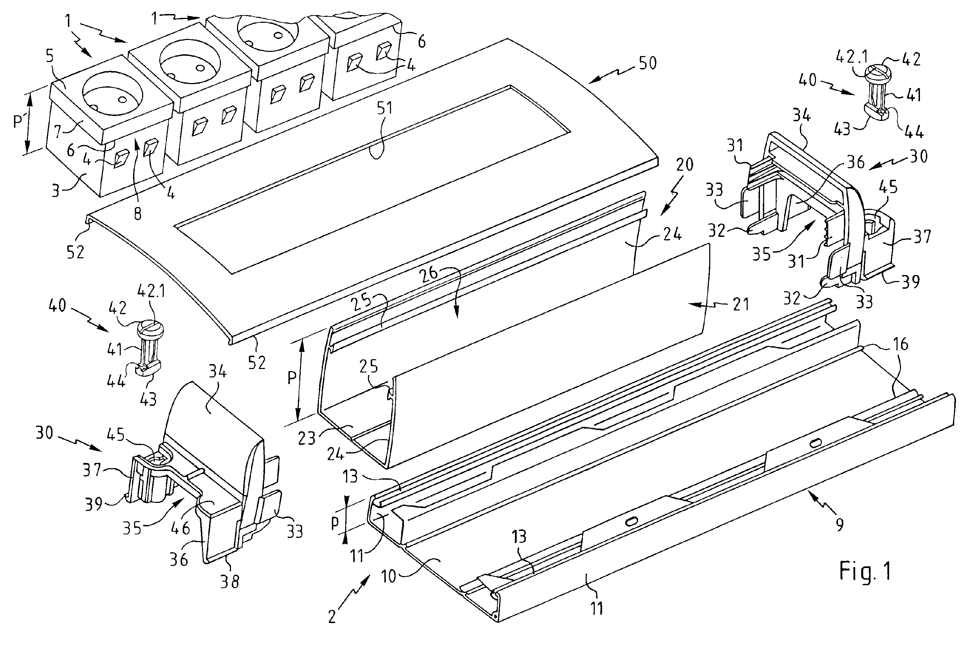

En référence aux figures, et en particulier à la figure 1, il s'agit globalement de rapporter un ensemble d'appareillages électriques 1 sur un conduit de câblage 2 avec un minimum d'encombrement et la meilleure esthétique possible.

Les appareillages électriques 1 représentés aux figures sont des prises de courant classiques qui sont ici au nombre de quatre, identiques les unes aux autres. Mais bien entendu, tout autre type d'appareillages électriques ou de télécommunication pourra être utilisé. De même, un nombre quelconque d'appareillages, y compris l'unité, peut être envisagé.

Il suffit de mentionner ici que les appareillages comportent chacun, de manière usuelle, un corps 3 parallélépipédique pourvu sur deux faces latérales opposées de dents 4 et présentant une face avant utile 5 sur laquelle les moyens d'interface avec l'extérieur (en l'espèce, les trous d'insertion des broches d'une prise de courant mâle correspondante) sont accessibles. Une collerette 7 adjacente à la face avant utile 5 forme vers l'arrière un épaulement 6 qui délimite avec les dents 4 une gorge 8 sur chacune des faces latérales correspondantes du corps 3, cette gorge servant à la fixation de l'appareillage 1, comme cela sera mieux expliqué ultérieurement.

Le conduit de câblage 2 comporte un socle 9 qui se présente globalement sous la forme d'un profilé, par exemple en matière plastique extrudée ou en matériau métallique tel que de l'aluminium filé ou de l'acier formé. Ce socle 9 possède un fond plat 10 et deux ailes longitudinales 11 formées par des retours latéraux à angle droit du fond 10. Les deux ailes 11 présentent une hauteur p qui correspond sensiblement à la profondeur hors tout du conduit. Conformément au problème de base que vise à résoudre l'invention, la profondeur hors tout p du conduit 2 est sensiblement inférieure à la profondeur P' de chacun des appareillages 1 (ou, dans l'hypothèse ou ces appareillages seraient de profondeurs différentes, du plus profond de ces appareillage).

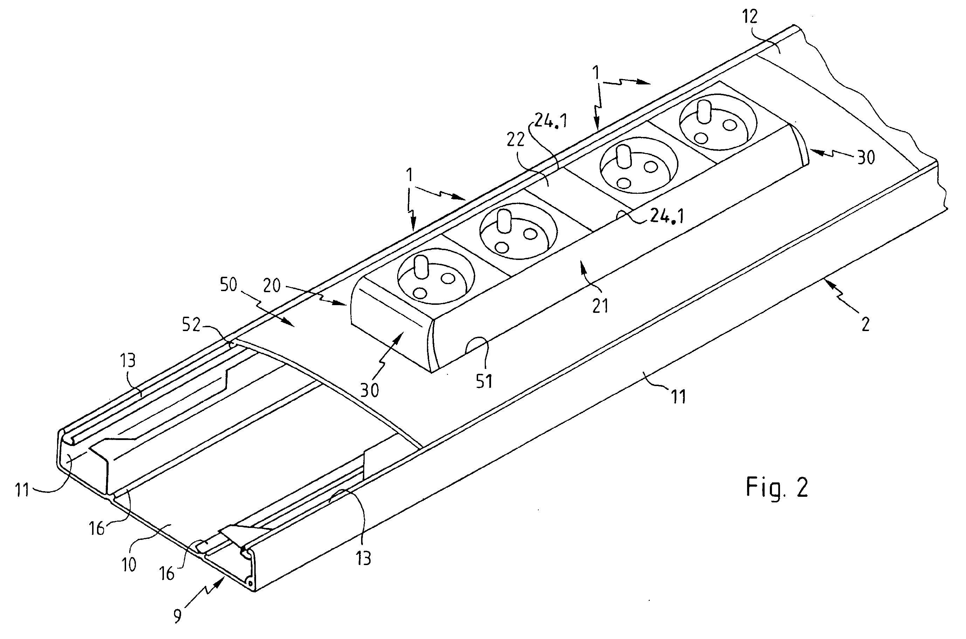

Un couvercle 12 (visible seulement sur la figure 2) est rapporté sur le socle 9 du conduit 2. A cet effet, le couvercle 12 est pourvu, à ses deux bords latéraux, de deux bourrelets longitudinaux (non visibles à la figure 2) aptes à venir en prise dans deux gorges longitudinales 13 correspondantes ménagées au sommet des ailes 11 du socle 9.

Enfin, de part et d'autre de son plan médian, le fond 10 du socle 9 est pourvu, sur sa face intérieure, de deux lames 16 qui, inclinées l'une vers l'autre, forment des glissières ou rails. Ces glissières 16 sont ici venues de matière avec le reste du socle 9, par exemple par extrusion. Mais elles pourraient également être rapportées, par exemple par soudure, rivetage, etc.

Le conduit 2 ne relevant pas dans tous ses détails de la présente invention, il ne sera pas davantage décrit.

Le montage des appareillages 1 sur le conduit 2 s'effectue par l'intermédiaire d'un boîtier 20.

Ce boîtier 20 comporte un corps principal 21 qui est ici constitué par un profilé de longueur adaptée à celle de l'ensemble des appareillages 1 juxtaposés, éventuellement avec un ou plusieurs éléments de séparation tels qu'une entretoise 22 disposée entre deux appareillages. En l'espèce, le corps profilé 21 présente un profil en forme générale de U et possède ainsi un fond 23 plat et deux branches 24. Les deux branches 24 présentent une hauteur P qui correspond sensiblement à la profondeur hors tout du boîtier 21. Cette profondeur P du boîtier 21 est légèrement supérieure à la profondeur P' des appareillages 1 de manière à permettre le câblage de ces appareillages, qui est généralement effectué sur leur face arrière opposée à la face avant utile 5. Il en résulte que la profondeur P du boîtier 20 est supérieure à la profondeur p du conduit 2.

D'autre part, la largeur du corps profilé 21 est inférieure à celle du conduit 2, de telle sorte que la partie inférieure du boîtier 20 soit logée dans le conduit 2.

De plus, en l'espèce et dans la mesure où le socle 9 du conduit 2 possède un profil en forme générale de U, l'ouverture frontale de ce socle 9, délimitée par les bords supérieurs de ces deux ailes 11 sur lesquelles sont ménagées les gorges longitudinales 13, présente une largeur supérieure à celle du boîtier 20. Cette supériorité de largeur de l'ouverture frontale du socle 9 du conduit par rapport au boîtier 20 est préférable, quelle que soit d'ailleurs la forme du profil du socle 9 (en particulier dans l'hypothèse d'un profil de forme générale trapézoïdale ou en forme de C avec des retours). Cette plus grande largeur du socle 9 du conduit 2 permet en effet d'offrir, d'une part, une meilleure accessibilité au volume intérieur du socle 9 du conduit 2 et, d'autre part, une meilleure ergonomie de ce volume, avec en particulier la possibilité d'équiper ce dernier d'un compartimentage. En outre, le fait qu'un jeu subsiste entre le boîtier et les bords de l'ouverture frontale du socle du conduit offre l'avantage de permettre le passage de câbles.

Les bords longitudinaux supérieurs libres 24.1 des deux branches 24 du corps profilé 21 délimitent une ouverture frontale 26 permettant à la fois l'introduction des appareillages 1 dans le boîtier 20 et l'accès, après implantation, à leur face avant utile d'enjoliveur 5.

Chacune des deux branches 24 du corps profilé 21 est pourvue, en saillie de sa face intérieure et au voisinage de son bord longitudinal supérieur, d'une cornière longitudinale 25. Les deux cornières longitudinales 25 ainsi ménagées intérieurement sur les deux branches 24 forment un passage à point dur pour les dents 4 équipant le corps 3 de chacun des appareillages 1. Ainsi, lorsque chacun des appareillages 1 est introduit dans le corps profilé 21 du boîtier 20 par l'ouverture frontale 26 ménagée entre les deux bords longitudinaux des ailes 24, les dents 4 de l'appareillage 1, qui présentent des faces d'entrée inclinées, forcent, au contact des cornières 25, un léger écartement élastique des ailes 24, ce qui permet aux dents 4 de franchir les cornières 25.

On pourrait toutefois prévoir que les dents 4 soient élastiquement rétractables, de sorte qu'aucun écartement élastique des ailes 24 ne serait nécessaire.

Quoi qu'il en soit, après que les dents 4 les ont franchies, les cornières 25 sont reçues dans les gorges 8 de l'appareillage 1 et immobilisent celui-ci en étant prises entre, d'une part, les dents 4 qui s'opposent à l'extraction de l'appareillage 1, et, d'autre part, l'épaulement 6 qui s'oppose à l'enfoncement de l'appareillage 1. Les cornières 25 constituent ainsi des moyens de réception des appareillages 1 dans le boîtier 21. Cette réception est complète : l'immobilisation ainsi opérée de chaque appareillage 1 par les cornières 25 est telle que la face avant utile 5 de chaque appareillage 1 affleure l'ouverture frontale 26 et, partant, les bords longitudinaux des ailes 24.

Le corps profilé 21 peut avantageusement être réalisé en matière plastique extrudée, d'un seul tenant avec son fond 23, ses ailes 24 et les cornières de réception 25. Mais il peut également être réalisé en un matériau métallique tel que de l'aluminium filé ou de l'acier formé.

Le boîtier 20 comporte de plus deux embouts 30 qui sont rapportés à chacune des deux extrémités du corps profilé 21 par des moyens de montage. Ces moyens de montage sont constitués par des moyens d'emboîtement simple et ne comportent aucun autre moyen de verrouillage de cet emboîtement tel que des moyens de serrage, vissage ou encliquetage. Toutefois, l'emboîtement opéré de chaque embout 30 sur le corps profilé 21 est de préférence suffisamment ajusté pour procurer un certain serrage, intrinsèquement.

Plus précisément, les moyens de montage par emboîtement comportent des pattes intérieures 31, 32 et des pattes extérieures 33 qui prennent en sandwich les ailes 24 du corps profilé 21. Outre qu'elles participent au montage emboîté serré de chaque embout 30 sur le corps profilé 21, les pattes extérieures 33 exercent une fonction supplémentaire : elles s'opposent à l'écartement des ailes 24 du corps profilé 21.

Outre ses moyens de montage sur le corps profilé 21, chaque embout 30 possède une paroi 34 qui est en l'espèce bombée à la fois à des fins esthétiques et pour éviter tout accroc avec un objet ou une personne frôlant le boîtier. Cette paroi 34 possède un bord supérieur qui se trouve au même niveau que les bords supérieurs longitudinaux des ailes 24 et qui complète avec ces derniers la délimitation de l'ouverture frontale 26.

La paroi 34, qui est par ailleurs jointive avec l'extrémité correspondante du corps profilé 21, obture les extrémités du corps profilé 21. Toutefois, cette obturation n'est pas complète et concerne seulement la partie haute du boîtier qui est destinée à faire saillie du conduit 2, comme cela sera mieux expliqué ultérieurement. Dans sa partie basse, qui est adjacente au fond 23 du corps profilé 21 et qui est destinée à être logée, et par conséquent masquée, dans le conduit 2, chaque embout 30 présente un passage 35 pour des câbles électriques ou optiques.

Le boîtier 20 est fixé sur le socle 9 du conduit 2 par des moyens de fixation qui comportent, sur chacun des deux embouts 30, deux patins latéraux 36, 37 pourvus chacun d'un talon ou lame 38, 39 agencé pour venir en prise avec les glissières 16 équipant le fond 10 du socle 9 du conduit 2.

Le patin 37 de chaque embout 30 possède une certaine mobilité latérale, c'est-à-dire suivant une direction perpendiculaire à la direction longitudinale du boîtier 20 et du conduit 2. Le patin 37 est ainsi mobile entre une configuration de blocage par friction ou serrage sur la glissière 16 correspondante du socle 9 du conduit 2, une configuration de coulissement libre sur cette glissière et une configuration de libération complète de sa prise avec cette glissière permettant l'extraction du boîtier 20.

En l'espèce, chacun des deux embouts 30 du boîtier 20, avec ses moyens de montage rapporté sur le corps profilé 21 et ses moyens de fixation sur le socle 9 du conduit 2, est réalisé en une seule pièce, par exemple en matière plastique moulée, ou en un matériau métallique tel que du Zamak. Ainsi, en particulier, les patins 36, 37 sont venus de matière avec le reste de chaque embout 30. Dans ce cas, la mobilité du patin mobile 37 résulte d'une flexibilité élastique de ce patin, avec une configuration de repos correspondant à la configuration de coulissement libre sur la glissière 16 correspondante, en prise avec celle-ci.

Le placement et le maintien du patin mobile 37 dans ces configurations de blocage par friction ou de libération sont obtenus par une action extérieure forçant la flexion du patin mobile 37 à l'encontre de son élasticité propre.

La flexion du patin mobile 37 vers sa configuration de libération peut par exemple être obtenue (lorsque l'on souhaite occasionnellement démonter le boîtier) à l'aide d'un outil du type tournevis qui exercera sur ledit patin un effort d'escamotage vers l'intérieur en vue de son désengagement de la glissière 16 concernée.

En ce qui concerne le placement et le maintien du patin mobile 37 dans sa configuration de blocage par friction, des moyens de verrouillage spécifiques sont prévus sur chacun des embouts 30. Dans l'exemple illustré, ces moyens de verrouillage se présentent sous la forme d'un élément à came 40. Cet élément à came 40 se compose d'un tourillon 41 reçu pour pivoter librement, dans un palier 45 ménagé sur l'embout 30 concerné, d'une tête 42 disposée à l'une des deux extrémités du tourillon 41 et sur laquelle est ménagée une empreinte 42.1 destinée à coopérer avec un outil du type tournevis, et d'un sabot 43 disposé à l'autre extrémité du tourillon 41 et présentant une forme globalement parallélépipédique allongée transversalement à l'axe de pivotement du tourillon 41 dans le palier 45.

Le sabot 43 de l'élément à came 40 est pourvu sur son talon d'un bossage 44 apte à être reçu dans une empreinte ménagée sur un rebord d'extrémité arrière du puits 45 pour immobiliser temporairement l'élément à came 40 en position de verrouillage. Sur le même principe, une solution alternative équivalente pourrait consister à prévoir que le sabot 43 de l'élément à came 40 soit pourvu, à l'une au moins de ses extrémités, d'un bossage apte à être reçu dans une empreinte ménagée en correspondance sur le patin mobile 37 pour immobiliser temporairement l'élément à came 40 en position de verrouillage.

En l'espèce, le tourillon 41 de l'élément à came présente globalement une forme de profilé à section en forme de croisillon.

En outre, l'élément à came 40, avec son tourillon 41, sa tête 42 et son sabot 43, peut avantageusement être réalisé en une seule pièce en matière plastique moulée.

Par ailleurs, le palier ou puits 45 dans lequel le tourillon 41 de l'élément à came 40 est monté pivotant est également venu de matière avec le reste de chaque embout 30.

Pour permettre l'installation du boîtier 20 sur le socle 9 du conduit 2, le couvercle 12 est sectionné de part et d'autre de la zone d'implantation du boîtier 20. L'ouverture ainsi laissée par cette interruption localisée du couvercle 12 du conduit 2 est obturée à l'aide d'un cache ajouré ou plastron 50 qui se substitue ainsi à la portion de couvercle 12 manquante. Ce plastron 50 présente un ajour 51 de forme et de dimensions adaptées au contour extérieur du boîtier 20, de manière à permettre à la partie haute de celui-ci, qui déborde en profondeur du socle 9 du conduit 2, de faire saillie de ce plastron 50 au travers de son ajour 51, comme cela est visible à la figure 2.

Pour sa fixation sur le socle 9 du conduit 2, le plastron 50 est pourvu, comme le couvercle 12 du conduit 2, de bourrelets longitudinaux 52 ménagés le long de ses bords latéraux pour venir en prise dans les gorges longitudinales 13 du socle 9 du conduit 2.

De la sorte, le plastron 50 assure la continuité du couvercle 12 du conduit 2 tout en permettant une saillie en profondeur du boîtier 20 avec les appareillages 1 qu'il reçoit.

Tel qu'il apparaît sur la figure 2, les bords supérieurs libres 24.1 du corps 21 se trouvent à distance du plastron 50 en étant exempts de toute interaction avec ce dernier.

Plus généralement, la partie haute du boîtier 20, qui fait saillie du plastron 50, est également exempte de toute interaction avec celui-ci, le boîtier 20 s'étendant au-delà du plastron 50 sur une partie relativement importante de sa hauteur P.

De la sorte, sans que la rigidité de l'ensemble s'en trouve altérée, la hauteur p du conduit 2 peut être réduite autant que possible, le boîtier 20 étant de toute manière fixé au fond 10 du conduit 2.

On pourrait en outre prévoir que le plastron 50 soit pourvu d'autres moyens pour sa fixation sur le boîtier 20, en plus ou en alternative des bourrelets 52 servant à sa fixation sur le socle 9 du conduit 2. Ces moyens supplémentaires ou alternatifs pourront coopérer soit avec le corps profilé soit avec les embouts 30, ou encore avec toute autre pièce associée d'une manière ou d'une autre au socle du conduit.

Un jeu aussi réduit que possible, voire nul, est prévu entre le contour de l'ajour 51 du plastron 50 et le boîtier 20. Cet ajustement possède, outre ses vertus esthétiques, une fonction mécanique de cerclage du boîtier 20. Ce cerclage renforce la cohésion du boîtier 20 et s'oppose en particulier, d'une part, à l'épanouissement intempestif des ailes 24 du corps profilé 21 afin d'éviter l'échappement involontaire des appareillages 1 de leur prise avec les cornières de réception 25, et, d'autre part, au déboîtement des embouts 30, ce qui pallie à l'absence d'autres moyens de verrouillage de l'emboîtement des embouts 30 sur les extrémités du corps profilé 21.

Enfin, pour renforcer l'assise du plastron 50 sur le socle 9 du conduit 2 et éviter toute interférence de ce plastron avec les moyens de fixation ou de verrouillage et avec le passage 35 pour les câbles, chacun des embouts 30 présente une marche extérieure 46 qui forme une butée d'appui pour le plastron 50.

L'invention n'est pas limitée au mode de réalisation qui vient d'être décrit, mais englobe au contraire toutes les variantes reprenant, avec des moyens équivalents, ses caractéristiques essentielles. En particulier, bien qu'il ait été décrit un dispositif comportant un seul boîtier, il serait également possible de réaliser un dispositif analogue comportant plusieurs boîtiers disposés à la file ou jumelés et traversant l'ajour d'un plastron commun. Il pourrait notamment être intéressant de disposer de deux boîtiers côte à côte dans le sens de la largeur, pour autant qu'un conduit suffisamment large soit utilisé. Le plastron réaliserait alors un cerclage, sur tout le pourtour de son ajour, de l'ensemble des deux boîtiers et pourrait même présenter une bande médiane destinée à occulter, à des fins esthétique et de sécurité, l'espace libre laissé longitudinalement entre les deux boîtiers.

## Revendications

1. Dispositif pour la fixation d'au moins un appareillage (1) dans un conduit (2) de câblage, comportant :
- un boîtier (20) qui est pourvu, d'une part, de moyens (36, 37, 38, 39) pour sa fixation dans le conduit (2) et, d'autre part, de moyens (25) de réception de l'appareillage (1) dans le boîtier (20) et qui possède une ouverture frontale (26) d'introduction de l'appareillage (1) ;
- un cache ajouré ou plastron (50) pourvu de moyens (52) pour sa fixation sur le conduit (2) et/ou le boîtier (20) à la façon d'un capot et présentant un ajour (51),
**caractérisé en ce que**, pour une fixation semi-encastrée de l'appareillage (1) dans un conduit (2) de profondeur (p) inférieure à celle (P') de l'appareillage (1), le boîtier (20) fait partiellement saillie du plastron (50) au travers de l'ajour (51) de ce dernier.

2. Dispositif selon la revendication 1, dans lequel le boîtier (20) comporte un corps principal (21) constitué par un profilé de longueur adaptée à celle du ou des appareillages (1) à fixer et deux embouts (30) qui sont rapportés à chacune des deux extrémités du corps profilé (21) par des moyens de montage (31, 32, 33) et qui portent les moyens de fixation du boîtier (20) sur le conduit (2).

3. Dispositif selon la revendication 2, dans lequel les moyens de montage rapporté de chacun des embouts (30) sur le corps profilé (21) du boîtier (20) sont constitués par des moyens d'emboîtement simple (31, 32, 33) et ne comportent aucun autre moyen de verrouillage de cet emboîtement.

4. Dispositif selon la revendication 3, dans lequel les moyens d'emboîtement de chaque embout comportent une partie extérieure (33) qui s'oppose à l'épanouissement du corps profilé (21).

5. Dispositif selon l'une des revendications 3 et 4, dans lequel un jeu aussi réduit que possible, voire nul, est prévu entre le contour de l'ajour (51) du plastron (50) et le boîtier (20).

6. Dispositif selon l'une des revendications 2 à 5, dans lequel les moyens de fixation du boîtier (20) sur le conduit comportent, sur chacun des deux embouts (30), deux patins latéraux (36, 37) agencés pour venir en prise avec deux glissières (16) associées ménagées longitudinalement sur le conduit (2).

7. Dispositif selon la revendication 6, dans lequel l'un (37) au moins des deux patins de l'un au moins des deux embouts (30) du boîtier (20) est mobile latéralement entre une configuration de blocage par friction sur la glissière (16) correspondante du conduit (2), une configuration de coulissement libre sur la glissière (16) et une configuration de libération complète de sa prise avec la glissière (16).

8. Dispositif selon la revendication 7, dans lequel le patin mobile (37) est soumis à l'action d'un moyen de verrouillage (40) mobile entre deux positions, l'une de verrouillage maintenant le patin mobile (37) dans sa configuration de blocage sur la glissière (16) et l'autre de déverrouillage laissant le patin mobile (37) libre de revenir en configuration de coulissement libre sur la glissière (16) ou de libération complète du boîtier (20) de sa prise avec la glissière (16).

9. Dispositif selon la revendication 8, dans lequel le moyen de verrouillage du patin mobile (37) comporte un élément à came (40) monté pivotant sur l'embout (30) concerné du boîtier (20) et offrant une prise quelconque (42.1) pour son actionnement pivotant entre ses positions de verrouillage et de déverrouillage.

10. Dispositif selon la revendication 9, dans lequel les deux positions angulaires de l'élément à came sont séparées par un quart de tour.

11. Dispositif selon la revendication 10, dans lequel l'élément à came (40) se compose d'un tourillon (41) reçu pour pivoter librement dans un palier (45) ménagé sur l'embout (30) concerné, d'une tête (42) disposée à l'une des deux extrémités du tourillon (41) et sur laquelle est ménagée une empreinte (42.1) destinée à coopérer avec un outil du type tournevis, et d'un sabot (43) disposé à l'autre extrémité du tourillon (41) et présentant une forme globalement parallélépipédique allongée transversalement à l'axe de pivotement du tourillon (41) dans le palier (45).

12. Dispositif selon la revendication 11, dans lequel le sabot (43) de l'élément à came (40) est pourvu d'un bossage (44) apte à être reçu dans une empreinte ménagée en correspondance sur le palier (45) ou le patin mobile (37) pour immobiliser temporairement l'élément à came (40) en position de verrouillage.

13. Dispositif selon l'une des revendications 11 et 12, dans lequel le tourillon (41) de l'élément à came présente globalement une forme de profilé à section en forme de croisillon.

14. Dispositif selon l'une des revendications 12 et 13, dans lequel l'élément à came (40), avec son tourillon (41), sa tête (42) et son sabot (43), est réalisé en une seule pièce en matière plastique moulée.

15. Dispositif selon l'une des revendications 2 à 14, dans lequel chacun des deux embouts (30) du boîtier (20), avec ses moyens de montage rapporté (31, 32, 33) sur le corps profilé (21) et ses moyens de fixation (37, 38) sur le conduit (2), est réalisé en une seule pièce en matière plastique moulée.

16. Dispositif selon la revendication 15, dans lequel la mobilité du patin mobile (37) résulte d'une flexibilité élastique de ce patin, avec une configuration de repos correspondant à la configuration de coulissement libre sur la glissière (16) correspondante, en prise avec celle-ci.

17. Dispositif selon l'une des revendications 2 à 16, dans lequel le corps profilé (21) présente un profil en forme générale de U.

18. Dispositif selon la revendication 17, dans lequel les moyens de réception du ou des appareillages électriques (1) dans le boîtier (20) comportent des cornières longitudinales (25) ménagées en saillie de la face intérieure des deux branches (24) du corps profilé en U.

19. Dispositif selon l'une des revendications 2 à 18, dans lequel le corps profilé (21) est réalisé en matière plastique extrudée.
